# EUROPEAN PATENT APPLICATION

(11) **EP 4 682 983 A1**
(43) Date of publication of application: **21.01.2026**
(21) Application number: 24770865.4
(22) Date of filing: 11.03.2024
(51) Int. Cl.: H01M 4/38, H01M 4/36

(54) **LITHIUM-ION BATTERY NEGATIVE ELECTRODE ACTIVE MATERIAL**

(30) Priority: 15.03.2023 JP 2023041160
(71) Applicant: Daido Steel Co., Ltd., Nagoya-shi Aichi 461-8581 (JP)
(72) Inventor: YOSHIMI, Yusuke, Nagoya-shi, Aichi 457-8545 (JP); HAMADA, Yuki, Nagoya-shi, Aichi 457-8545 (JP); KIMURA, Yuta, Nagoya-shi, Aichi 457-8545 (JP)
(74) Representative: Diehl & Partner
(86) International application number: PCT/JP2024/009451
(87) International publication number: WO 2024/190760

(57) **Abstract**

The present invention relates to a lithium-ion battery negative electrode active material that is a Si-based granulated body in which a Si-based powder and an electroconductive material are bonded using a binder, the Si-based powder containing a Si phase, and the Si-based granulated body having a carbon coating on a surface thereof.

## Description

### TECHNICAL FIELD

This invention relates to a lithium-ion battery negative electrode active material.

### BACKGROUND ART

A lithium-ion battery has an advantage of being able to miniaturize with a high capacity and a high voltage, and has been widely used as a power supply for mobile phones and laptops. In recent years, it has attracted much expectations as a power supply for power applications such as electric vehicles and hybrid vehicles, and the development thereof has been actively promoted.

In the lithium-ion battery, lithium ions (hereinafter may be referred to as "Li ions") move between a positive electrode and a negative electrode for charging and discharging. On a negative electrode side, Li ions are occluded in a negative electrode active material during charging, and Li ions are released from the negative electrode active material during discharging.

Among the above, graphite has been widely used as the negative electrode active material, but a theoretical capacity thereof is only 372 mAh/g, and a further higher capacity has been desired.

Therefore, as a lithium-ion battery negative electrode active material, Si that exhibits a capacity about 10 times that of graphite has been proposed. However, since Si undergoes a large volume change during charging and discharging, Si particles collapse by repeating charging and discharging, and sufficient cycle characteristics cannot be exhibited.

Therefore, Patent Literature 1 discloses that the collapse can be prevented by using composite particles including a lithium active phase of silicon alone and a lithium active phase composed of other components as a negative electrode active material.

### CITATION LIST

### PATENT LITERATURE

Patent Literature 1: JP2013-235682A

### SUMMARY OF INVENTION

### TECHNICAL PROBLEM

On the Si surface, an electrolytic solution is decomposed during charging and discharging, and a film made of the decomposition product is formed on the surface. The film has low conductivity, and the film becomes thick by repeating a charging and discharging cycle, so that resistance on the Si surface further increases and the electrode capacity decreases. Even when Si is finely pulverized or composited as described above, the film is still formed to be thick, which influences the cycle characteristics.

In view of the above circumstances, an object of the present invention is to provide a lithium-ion battery negative electrode active material having excellent cycle characteristics while maintaining a good initial discharge capacity and initial Coulombic efficiency.

### SOLUTION TO PROBLEM

As a result of intensive studies on the above problems, the inventors of the present invention have found that, by forming a Si-based powder into a granulated body and further forming a carbon film on a surface of the granulated body, decomposition of an electrolytic solution is prevented, and excellent cycle characteristics can be obtained.

In addition, by using a binder in forming the granulated body, it is possible to prevent collapse of the granulated body due to a volume change during charging and discharging. On the other hand, the conductivity of the obtained granulated body deceases by granulation using the binder. Therefore, the inventors have conceived that a decrease in conductivity can also be prevented by forming a granulated body using a conductive material together with the Si-based powder, and have completed the present invention.

That is, the gist of the present invention is as follows.
[1] A lithium-ion battery negative electrode active material, including a Si-based granulated body that is formed by binding a Si-based powder and a conductive material by a binder, in which
   the Si-based powder includes a Si phase, and
   the lithium-ion battery negative electrode active material includes a carbon film on a surface of the Si-based granulated body.
[2] The lithium-ion battery negative electrode active material according to the above [1], in which the Si-based granulated body has a coverage of the carbon film of 30% or more.
[3] The lithium-ion battery negative electrode active material according to the above [1] or [2], in which the Si-based granulated body has a content proportion of SiC of less than 15 mass%.
[4] The lithium-ion battery negative electrode active material according to any one of the above [1] to [3], in which the Si-based granulated body has a strength of 1.0 MPa or more.
[5] The lithium-ion battery negative electrode active material according to any one of the above [1] to [4], in which
   the Si-based powder further includes a Si-X compound phase and at least one of a Sn-Y compound phase or an Al-Y compound phase,
   X in the Si-X compound phase is at least one element selected from the group consisting of Fe, Ni, Co, Mn, Ti, V, Zr, and Cr,
   Y in the Sn-Y compound phase and the Al-Y compound phase is at least one element selected from the group consisting of Cu, Fe, Ni, Cr, Co, Mn, Zr, and Ti, and
   the Si-based powder has a content proportion of the Si phase of 10 mass% to 80 mass%, and a total content proportion of the Sn-Y compound phase and the Al-Y compound phase of 0.1 mass% to 18 mass%.
[6] The lithium-ion battery negative electrode active material according to any one of the above [1] to [5], in which the conductive material includes a particulate carbon and a fibrous carbon.
[7] The lithium-ion battery negative electrode active material according to the above [5] or [6], in which the Si-based powder includes a Sn-Cu compound phase as the Sn-Y compound phase.

### DESCRIPTION OF EMBODIMENTS

Hereinafter, embodiments of the present invention are described. Note that, the present invention is not limited to the embodiments described below. In addition, "to" indicating a numerical range is used to mean that numerical values written before and after it are included as a lower limit value and an upper limit value.

In addition, in the present description, mass and wt% have the same meaning, and part by mass and part by weight have the same meaning.

### <<Lithium-Ion Battery Negative Electrode Active Material>>

A lithium-ion battery negative electrode active material according to the present embodiment includes Si-based granulated body in which a Si-based powder and a conductive material are bound by a binder. The Si-based powder includes a Si phase. The Si-based granulated body includes a carbon film on a surface.

When the Si-based powder is used as the negative electrode active material, an electrolytic solution is decomposed on the surface thereof during charging and discharging, and a film is formed on a Si surface by a decomposition product of the electrolytic solution. When the Si-based powder is finely pulverized, the film formation by the decomposition product is remarkable, resistance on the Si surface further increases, and an electrode capacity decreases.

With respect to this, when a specific surface area is reduced by forming the Si-based powder into a granulated body to reduce an area in contact with the electrolytic solution, and a carbon film on the surface of the granulated body is formed, the decomposition of the electrolytic solution can be prevented. As a result, the film formation by the decomposition product is prevented, and the electrode capacity is maintained even when a charging and discharging cycle is repeated, so that cycle characteristics are excellent.

In addition to the above, collapse of the granulated body due to a volume change of Si accompanying charging and discharging can be prevented by binding with the binder. In addition, a decrease in conductivity of the granulated body due to the use of the binder can be prevented by the inclusion of the conductive material.

The Si-based granulated body, which constitutes the lithium battery negative electrode active material according to the present embodiment, has a strength of preferably 1.0 MPa or more, more preferably 2.0 MPa or more, and still more preferably 3.0 MPa or more, from the viewpoint of suitably preventing collapse of the granulated body due to a volume change of Si accompanying charging and discharging. The strength thereof is preferably as high as possible, and an upper limit thereof is not particularly limited, and may be, for example, 50 MPa or less.

The strength of the Si-based granulated body in the present embodiment can be controlled based on a kind and a content proportion of the binder.

Note that, in the present description, the strength of the Si-based granulated body means an average value when a compressive strength of five granulated bodies is measured using a particle compressive strength evaluation device. As the particle compressive strength evaluation device, a tester of MCT series manufactured by Shimadzu Corporation can be adopted.

Similarly, the lithium-ion battery negative electrode active material according to the present embodiment has a strength of preferably 1.0 MPa or more, more preferably 2.0 MPa or more, and still more preferably 3.0 MPa or more, from the viewpoint of suitably preventing collapse of the granulated body due to a volume change of Si accompanying charging and discharging. The strength thereof is preferably as high as possible, and an upper limit thereof is not particularly limited, and may be, for example, 50 MPa or less.

Note that, although the strength may change before and after the formation of the carbon film on the surface of the Si-based granulated body, the strength of the Si-based granulated body and the strength of the lithium-ion battery negative electrode active material including the carbon film may be regarded as the same since the strength of the Si-based granulated body is mainly determined by the binder that binds the Si-based powder and the conductive material.

The lithium-ion battery negative electrode active material according to the present embodiment preferably has a particle diameter of 1 µm to 30 µm.

Here, the particle diameter is preferably 1 µm or more, more preferably 1.5 µm or more, and still more preferably 2 µm or more, from the viewpoint of controlling the specific surface area of the lithium-ion battery negative electrode active material and suitably preventing the decomposition of the electrolytic solution. In addition, the particle diameter is preferably 30 µm or less, more preferably 25 µm or less, and still more preferably 15 µm or less.

Note that, the particle diameter in the present description means an average particle diameter of the granulated bodies determined from a particle shape distribution measurement result using an image type particle size distribution measuring device. As the image type particle size distribution measuring device, a device of morphology series manufactured by Malvern Panalytical can be adopted.

### <Si-based Powder>

The Si-based powder in the present embodiment includes a Si phase. In addition to the Si phase, a Si-X compound phase, and at least one of a Sn-Y compound phase or an Al-Y compound phase is preferably further included.

### · Si Phase

The Si phase in the present embodiment occludes and releases Li and serves as a negative electrode active material.

The Si phase is generally included in the Si-based powder as Si particles. The Si particles are preferably particles in which 95 mass% or more thereof is composed of the Si phase, and may be particles composed only of the Si phase.

A content proportion of the Si phase in the Si-based powder in the present embodiment is preferably 10 mass% to 100 mass%, and more preferably 10 mass% to 80 mass%. Here, the content proportion is preferably 10 mass% or more, more preferably 20 mass% or more, still more preferably 30 mass% or more, even more preferably 50 mass% or more, and most preferably 55 mass% or more, from the viewpoint of obtaining a good initial discharge capacity. In addition, even in the case where the content proportion of the Si phase is 100 mass%, that is, the Si-based powder is composed only of the Si phase, the effect of the present invention is exhibited. On the other hand, the content proportion is preferably 80 mass% or less, more preferably 75 mass% or less, and still more preferably 70 mass% or less, from the viewpoint of suitably obtaining an effect of a phase other than the Si phase.

The Si particles including the Si phase in the present embodiment preferably has an average particle diameter of 0.05 µm to 5 µm. Here, the average particle diameter is preferably 5 µm or less, more preferably 3 µm or less, still more preferably 2 µm or less, even more preferably 1 µm or less, and particularly preferably 0.8 µm or less, from the viewpoint of reducing an absolute amount of expansion when Si occludes Li. A lower limit of the average particle diameter of the Si particles is not particularly limited, and is generally 0.05 µm or more.

Note that, in the present description, the average particle diameter of the Si particles means a primary particle diameter, and means a median diameter (D50) determined from a volume-based particle size distribution using a laser diffraction/scattering particle size distribution analyzer. The same applies to the average particle diameter of each particle in the Si-X compound phase, the Sn-Y compound phase, and the Al-Y compound phase to be described later.

### · Si-X Compound Phase

The Si-X compound phase in the present embodiment may be included in the Si-based powder together with the Si phase. The Si-X compound phase has a poor Li occlusion property and has very little expansion due to a reaction with Li ions. Therefore, the Si-X compound phase plays the role of a skeleton that maintains a structure of an electrode material. In addition, since a Si-X compound has high conductivity, it is also effective for ensuring conductivity between the Si phase and the conductive material.

The Si-X compound phase is generally included in the Si-based powder as Si-X compound particles. The Si-X compound particles are preferably particles in which 95 mass% or more thereof is composed of the Si-X compound phase, and may be particles composed only of the Si-X compound phase.

X in the Si-X compound phase in the present embodiment is at least one element selected from the group consisting of Fe, Ni, Co, Mn, Ti, V, Zr, and Cr. Among them, from the viewpoint of a low expansion property and high conductivity, X is preferably at least one element selected from the group consisting of Fe, Ni, Ti, and Cr, and more preferably at least one element selected from the group consisting of Fe, Ni, and Cr.

Examples of the Si-X compound in the present embodiment include compounds represented by Si₂X, SiX, and SiX₂. Examples of the compound represented by Si₂X include Si₂Fe, Si₂Ni, Si₂Co, Si₂Mn, Si₂Ti, Si₂V, Si₂Zr, and Si₂Cr.

Note that, the Si-X compound phase can be composed of only one kind of compound phase, and can also be composed of two or more kinds of phases, such as a Si-Fe compound phase and a Si-Ni compound phase.

A content proportion of the Si-X compound phase in the Si-based powder in the present embodiment is preferably 5 mass% to 75 mass%. Here, the content proportion is preferably 5 mass% or more, more preferably 10 mass% or more, and still more preferably 15 mass% or more, from the viewpoint of obtaining good cycle characteristics. In addition, the content proportion is preferably 75 mass% or less, more preferably 50 mass% or less, and still more preferably 40 mass% or less.

The Si-X compound particles including the Si-X compound phase in the present embodiment preferably has an average particle diameter of 0.05 µm to 5 µm. Here, the average particle diameter is preferably 5 µm or less, more preferably 3 µm or less, still more preferably 2 µm or less, even more preferably 1 µm or less, and particularly preferably 0.8 µm or less. A lower limit of the average particle diameter of the Si-X compound particles is not particularly limited, and is generally 0.05 µm or more.

### · Sn-Y Compound Phase and Al-Y Compound Phase

The Sn-Y compound phase in the present embodiment may be included in the Si-based powder together with the Si phase, or may be included in the Si-based powder together with the Si phase and the Si-X compound phase.

The Sn-Y compound phase has a theoretical capacity lower than that of Si and higher than that of the SiX compound. For example, a Si-Zr compound (Si-X compound) has a theoretical capacity of 100 mAh/g, while the Sn-Y compound has a theoretical capacity of 150 mAh/g to 600 mAh/g. Therefore, by including the Sn-Y compound phase in the Si-based powder, a Li ion diffusion path is easily ensured. In addition, a degree of expansion due to the reaction with Li ions is smaller in the Sn-Y compound than in the simple substance of Si or Sn having high reactivity with Li ions. Therefore, by including the Sn-Y compound phase, adverse influences on the cycle characteristics can be prevented to a low level. Further, the Sn-Y compound also has an effect of improving the conductivity, similar to the Si-X compound.

The effects of the Sn-Y compound phase as described above can also be obtained by using an Al-Y compound. Therefore, the Si-based powder in the present embodiment preferably includes at least one of the Sn-Y compound phase or the Al-Y compound phase.

The Sn-Y compound phase is generally included in the Si-based powder as Sn-Y compound particles. The Sn-Y compound particles are preferably particles in which 95 mass% or more thereof is composed of the Sn-Y compound phase, and may be particles composed only of the Sn-Y compound phase.

Similarly, the Al-Y compound phase is generally included in the Si-based powder as Al-Y compound particles. The Al-Y compound particles are preferably particles in which 95 mass% or more thereof is composed of the Al-Y compound phase, and may be particles composed only of the Al-Y compound phase.

Y in the Sn-Y compound phase and the Al-Y compound phase in the present embodiment is at least one element selected from the group consisting of Cu, Fe, Ni, Cr, Co, Mn, Zr, and Ti. Among them, from the viewpoint of achieving more excellent conductivity and good cycle characteristics, Y is Cu, that is, the Si-based powder in the present embodiment preferably includes at least one of a Sn-Cu compound phase or an Al-Cu compound phase, and more preferably includes a Sn-Cu compound phase.

From the viewpoint of the conductivity and the cycle characteristics, the Si-based powder in the present embodiment preferably includes the Sn-Cu compound phase or the Al-Cu compound phase in which Cu is selected as the element Y among the Sn-Y compound phase and the Al-Y compound phase, and more preferably includes the Sn-Cu compound phase.

Examples of the Sn-Y compound and the Al-Y compound in the present embodiment include an alloy of Sn and Y and an alloy of Al and Y. In the case of an alloy, an alloy of Sn and two or more kinds of Y elements or an alloy of Al and two or more kinds of Y elements may be used.

Note that, the Sn-Y compound phase and the Al-Y compound phase may be composed of only one kind of compound phase or may be composed of two or more kinds of phases.

A total content proportion of the Sn-Y compound phase and the Al-Y compound phase in the Si-based powder in the present embodiment is preferably 0.1 mass% to 18 mass%. Here, the content proportion is preferably 0.1% or more, more preferably 0.5% or more, and still more preferably 1% or more, from the viewpoint of obtaining a high discharge capacity. In addition, the content proportion is preferably 18 mass% or less, more preferably 15 mass% or less, and still more preferably 10 mass% or less, from the viewpoint of the cycle characteristics.

The Sn-Y compound particles including the Sn-Y compound phase in the present embodiment preferably has an average particle diameter of 0.05 µm to 5 µm. Here, the average particle diameter is preferably 5 µm or less, more preferably 3 µm or less, still more preferably 2 µm or less, even more preferably 1 µm or less, and particularly preferably 0.8 µm or less, from the viewpoint of reducing an expansion amount of the Sn-Y compound phase. A lower limit of the average particle diameter of the Sn-Y compound particles is not particularly limited, and is generally 0.05 µm or more.

The Al-Y compound particles including the Al-Y compound phase in the present embodiment preferably has an average particle diameter of 0.05 µm to 5 µm. Here, the average particle diameter is preferably 5 µm or less, more preferably 3 µm or less, still more preferably 2 µm or less, even more preferably 1 µm or less, and particularly preferably 0.8 µm or less, from the viewpoint of reducing an expansion amount of the Al-Y compound phase. A lower limit of the average particle diameter of the Al-Y compound particles is not particularly limited, and is generally 0.05 µm or more.

In the case where the Si-based powder in the present embodiment includes the Si-X compound phase and at least one of the Sn-Y compound phase or the Al-Y compound phase, a ratio of the content proportion in the Si-based powder represented by {Si-X compound phase/(Sn-Y compound phase + Al-Y compound phase)} is preferably 0.5 to 45. Here, the mass ratio is preferably 0.5 or more, more preferably 1 or more, still more preferably 1.5 or more, and particularly preferably 2.5 or more, from the viewpoint of preventing a decrease in cycle characteristics. On the other hand, the mass ratio is preferably 45 or less, more preferably 39 or less, and still more preferably 10 or less, from the viewpoint of obtaining a high initial discharge capacity.

### · Other Components

In the Si-based powder in the present embodiment, it is preferable that a total content proportion of elements other than Si, X, Sn, X, and Y constituting the Si phase, the Si-X compound phase, the Sn-Y compound phase, and the Al-Y compound phase is as small as possible, and it is more preferable that other elements are not included.

The other element may be included as, for example, an inevitable impurity, and specific examples thereof include nitrogen (N), sulfur (S), and phosphorus (P). In this case, the content proportion of each element is preferably N ≤ 0.10 mass%, S ≤ 0.10 mass%, P ≤ 0.10 mass%, and O ≤ 15 mass%.

A content proportion of the Si-based powder in the lithium-ion battery negative electrode active material according to the present embodiment is preferably 50 mass% to 90 mass%. Here, the content proportion is preferably 50% or more, more preferably 55% or more, and still more preferably 60% or more, from the viewpoint of obtaining a good discharge capacity. In addition, the content proportion is preferably 90 mass% or less, more preferably 88 mass% or less, and still more preferably 86 mass% or less, from the viewpoint of the cycle characteristics.

### <Conductive Material>

In the Si-based granulated body in the present embodiment, the Si-based powder and the conductive material are bound by a binder. With the conductive material, the conductivity of the Si-based granulated body is improved, and the Si-based powder present inside the Si-based granulated body can also contribute to charging and discharging.

The conductive material in the present embodiment may be any material that does not cause a volume change during charging and discharging, or causes a small volume change and does not deteriorate characteristics due to charging and discharging, and examples thereof include carbon and a metal.

A form of the carbon is not particularly limited, and examples thereof include a particulate carbon, a fibrous carbon, and a flat carbon. Among them, at least one of the particulate carbon or the fibrous carbon is preferred from the viewpoint of forming a conductive network in the granulated body, and the particulate carbon and the fibrous carbon are more preferably used in combination from the viewpoint of further improving the cycle characteristics.

The kind of the carbon is not particularly limited, and examples thereof include carbon black, graphite, carbon nanotube, a carbon nanofiber, fullerene, graphene, and graphene oxide.

Examples of the particulate carbon include carbon black, graphite, hard carbon, and soft carbon, and more specific examples of the carbon black include Ketjen black, acetylene black, and furnace black.

Examples of the fibrous carbon include a carbon nanotube (CNT) and a carbon nanofiber (CNF). As the carbon nanotube, either a single-walled carbon nanotube (SWCNT) or a multi-walled carbon nanotube (MWCNT) can be adopted.

In the case of using the particulate carbon, an average particle diameter thereof is preferably 0.005 µm to 0.5 µm. Here, the average particle diameter is preferably 0.005 µm or more, more preferably 0.01 µm or more, still more preferably 0.03 µm or more, and particularly preferably 0.05 µm or more, from the viewpoint of reducing an irreversible capacity of carbon. In addition, the average particle diameter is preferably 0.5 µm or less, more preferably 0.3 µm or less, still more preferably 0.2 µm or less, and particularly preferably 0.1 µm or less, from the viewpoint of dispersion in the granulated body.

In the case of using the fibrous carbon, a diameter thereof is preferably 0.001 µm to 0.5 µm. Here, the diameter is preferably 0.001 µm or more, more preferably 0.002 µm or more, still more preferably 0.003 µm or more, and particularly preferably 0.005 µm or more, from the viewpoint of maintaining a strength of carbon. In addition, the diameter is preferably 0.5 µm or less, more preferably 0.3 µm or less, and still more preferably 0.1 µm or less, from the viewpoint of dispersion in the granulated body.

In the case of using the fibrous carbon, a length thereof is preferably 0.1 µm to 30 µm. Here, the length is preferably 0.1 µm or more, more preferably 0.2 µm or more, still more preferably 0.3 µm or more, and particularly preferably 0.5 µm or more, from the viewpoint of forming a conductive path. In addition, the length is preferably 30 µm or less, more preferably 20 µm or less, still more preferably 15 µm or less, and particularly preferably 10 µm or less, from the viewpoint of dispersion in the granulated body.

In the case of using the particulate carbon and the fibrous carbon in combination, a content proportion of the particulate carbon is preferably higher, and the content proportion represented by the particulate carbon : the fibrous carbon is preferably 2:1 to 150:1, more preferably 5:1 to 150: 1, and still more preferably 5:1 to 100:1 in terms of mass ratio. However, the above does not exclude the use of the particulate carbon alone or the fibrous carbon alone.

Examples of the metal include Ni, Cr, and a SUS (stainless steel) alloy.

A content proportion of the conductive material in the lithium-ion battery negative electrode active material according to the present embodiment is preferably 0.5 mass% to 20 mass%. Here, the content proportion is preferably 0.5 mass% or more, more preferably 1 mass% or more, and still more preferably 3 mass% or more, from the viewpoint of achieving good Coulombic efficiency and cycle characteristics. In addition, the content proportion is preferably 20 mass% or less, more preferably 18 mass% or less, and still more preferably 15 mass% or less, from the viewpoint of a capacity.

Note that, the conductive material may be used alone or in combination of two or more kinds thereof, and in the case where two or more kinds thereof are used, a total content proportion thereof is preferably within the above range.

### <Binder>

The binder in the present embodiment is not particularly limited as long as it can bind the Si-based powder and the conductive material to form the Si-based granulated body.

From the viewpoint of improving the strength of the Si-based granulated body and suitably preventing the collapse of the granulated body due to charging and discharging, a poly(meth)acrylic acid or a salt thereof, a polyvinyl alcohol resin, a styrene-butadiene rubber, polyvinylidene fluoride, and the like are preferred, and a poly(meth)acrylic acid or a salt thereof, and a polyvinyl alcohol resin are more preferred. Only one kind of binder may be used, or two or more kinds of binders may be used in combination.

Examples of the salt of the poly(meth)acrylic acid include an ammonium salt, a sodium salt, and a lithium salt.

An addition amount of the binder in the lithium-ion battery negative electrode active material according to the present embodiment varies depending on the kind of the binder and the like, and is preferably, for example, 0.1 mass% to 20 mass%.

In the case of using a poly(meth)acrylic acid or a salt thereof, or polyvinyl alcohol as the binder, the addition amount of the binder is preferably 0.5 mass% to 20 mass%. Here, the addition amount is preferably 0.5 mass% or more, more preferably 1 mass% or more, and still more preferably 1.5 mass% or more, from the viewpoint of suitably preventing the collapse of the Si-based granulatod body. In addition, the addition amount is preferably 20 mass% or less, more preferably 18 mass% or less, and still more preferably 15 mass% or less, from the viewpoint of the capacity.

### <Carbon Film>

The lithium-ion battery negative electrode active material according to the present embodiment includes a carbon film on the surface of the Si-based granulated body. By including the carbon film, the conductivity of the surface of the Si-based granulated body is improved, and in addition, the decomposition of the electrolytic solution on the surface of the Si granulated body accompanying charging and discharging can be prevented.

The carbon film in the present embodiment is preferably has an average thickness of 0.1 nm to 2000 nm. Here, the average thickness is preferably 0.1 nm or more, more preferably 1 nm or more, still more preferably 5 nm or more, and particularly preferably 10 nm or more, from the viewpoint of improving the conductivity and preventing the decomposition of the electrolytic solution. In addition, the average thickness is preferably 2000 nm or less, more preferably 1000 nm or less, still more preferably 500 nm or less, and particularly preferably 100 nm or less, from the viewpoint of the capacity.

The average thickness can be determined by observing the surface of the lithium-ion battery negative electrode active material at a magnification of 200,000 times using a transmission electron microscope (TEM), and calculating an average value of the thicknesses at five portions in the carbon films as the average thickness.

A content proportion of the carbon film in the lithium-ion battery negative electrode active material according to the present embodiment is preferably 0.5 mass% to 30 mass%. Here, the content proportion is preferably 0.5 mass% or more, more preferably 1 mass% or more, and still more preferably 3 mass% or more, from the viewpoint of improving the conductivity and preventing the decomposition of the electrolytic solution. In addition, the content proportion is preferably 30 mass% or less, more preferably 25 mass% or less, and still more preferably 20 mass% or less, from the viewpoint of a capacity.

A coverage of the carbon film in the Si-based granulated body in the present embodiment is preferably 30% to 100%. Here, the coverage is preferably 30% or more, more preferably 50% or more, and still more preferably 80% or more, from the viewpoint of more suitably obtaining the effect of the carbon film. A higher coverage is more preferred. Therefore, an upper limit of the coverage is not particularly limited, and the coverage may be 100%, that is, all atoms present on the surface of the Si-based granulated body are carbon atoms (C), or may be 99.5% or less.

For the coverage of the carbon film in the Si-based granulated body, the surface of the Si-based granulated body is analyzed using X-ray photoelectron spectroscopy (XPS), and a proportion of the carbon atoms (C) in the obtained spectrum is defined as the coverage (%).

The coverage can be adjusted based on, for example, a time and a temperature for forming the carbon film.

When the surface of the Si-based granulated body in the present embodiment is covered with the carbon film, Si and C may react to form SiC. A content proportion of SiC in the Si-based granulated body is preferably less than 15 mass%. Here, the content proportion is preferably less than 15 mass%, more preferably 5 mass% or less, and still more preferably 1 mass% or less, from the viewpoint of an initial capacity and an initial Coulombic efficiency. A lower limit of the content proportion is not particularly limited, and is preferably as low as possible, and may be, for example, 0.01 mass% or more.

For the content proportion of SiC, powder X-ray diffraction (XRD) measurement is performed on the Si-based granulated body, and the ratio of an area of a peak derived from SiC to a total peak area in the obtained XRD pattern is defined as the content proportion (mass%) of SiC.

The content proportion of SiC can be adjusted based on, for example, the temperature and the time for forming the carbon film.

In the Si-based granulated body in the present embodiment, it is more preferable that the coverage of the carbon film on the surface of the Si-based granulated body is 30% or more and the content proportion of SiC is less than 15 mass%.

### <Production Method>

A method for producing a lithium-ion battery negative electrode active material according to the present embodiment is not particularly limited, and for example, the lithium-ion battery negative electrode active material can be produced by the following method.

First, respective raw materials are weighed out such that a desired composition is obtained, and a molten alloy obtained by melting the weighed raw materials by using a melting device such as an arc furnace, a high frequency induction furnace, or a heating furnace is quenched by using an atomization method, to thereby obtain alloy particles composed of a Si phase as a quenched alloy. When the raw materials were appropriately changed, alloy particles in which the Si-X compound phase, the Sn-Y compound phase, and the Al-Y compound phase are dispersed in the Si phase can also be obtained.

By pulverizing the obtained alloy particles, it is possible to obtain a Si-based powder composed of Si particles including a Si phase, and if desired, a Si-based powder containing Si-X compound particles including a SiX compound phase, Sn-Y compound particles including a Sn-Y compound phase, and Al-Y compound particles including an Al-Y compound phase.

In addition to the above, the Si-based powder may be obtained by independently obtaining the Si particles including a Si phase, and if desired, the Si-X compound particles including the Si-X compound phase, the Sn-Y compound particles including the Sn-Y compound phase, and the Al-Y compound particles including the Al-Y compound phase by an atomization method and subsequent pulverization, and then mixing them.

In the atomization method, a gas such as N₂, Ar, or He is sprayed at a high pressure, for example, 1 MPa to 10 MPa, against the molten alloy that is discharged into an atomization chamber and that continuously (rod-like) flows downward, whereby the molten alloy is pulverized and cooled. The cooled molten metal approaches a spherical shape while free-falling in the atomization chamber in a semi-molten state, and powdery particles can be obtained. In addition, high-pressure water may be sprayed instead of the gas from the viewpoint of improving a cooling effect.

In some cases, it is also possible to obtain a foiled particles by using a roll quenching method instead of the atomization method.

Next, each of the obtained particles is pulverized by an appropriate pulverizing device such as a ball mill, a bead mill, a disk mill, a coffee mill, or a mortar to adjust the particles to have a desired average particle diameter. Then, predetermined amounts of the Si particles including a Si phase and, and if desired, the Si-X compound particles including the Si-X compound phase, the Sn-Y compound particles including the Sn-Y compound phase, and the Al-Y compound particles including the Al-Y compound phase are mixed to obtain the Si-based powder. In addition, pulverization may be performed after mixing the respective particles, and in this case, an average particle diameter of the mixed powder is preferably 0.05 µm to 5 µm. Here, the average particle diameter is preferably 5 µm or less, more preferably 3 µm or less, still more preferably 2 µm or less, even more preferably 1 µm or less, and particularly preferably 0.8 µm or less, and is preferably 0.05 µm or more.

Here, in the case of adopting wet pulverization as the pulverization method, desolvation, solvent substitution, drying, and the like may be performed. In addition, the particle diameter of the Si particles, and if desired, the particle diameter of the Si-X compound particles, the Sn-Y compound particles, the Al-Y compound particles, and the like can be controlled by changing the device and condition in the pulverization.

Next, the Si-based powder obtained above, a conductive material, and a binder are prepared according to a predetermined blending ratio and dispersed in a dispersion medium to obtain a slurry. Note that, in the case of adopting wet pulverization for obtaining the Si-based powder, the slurry may be obtained by adding a conductive material or a binder in a state where the solvent used during pulverization is not removed.

The granulated body only can be obtained from the slurry obtained above by a known method, and for example, a spray drying method can be adopted. The spray drying method is a method in which the slurry is formed into fine droplets, and the droplets are instantaneously dried with hot air to remove the dispersion medium, thereby forming the Si-based granulated body in which powders are bonded in a granular shape by a binder.

Here, the particle diameter of the obtained Si-based granulated body can be controlled by adjusting a solid content concentration in the slurry, a pressure during drying, and the like.

A carbon film is formed on the surface of the obtained Si-based granulated body using a physical vapor deposition method (PVD method) such as a vacuum deposition method, a sputtering method, an ion plating method, an MBE method, or laser ablation, a chemical vapor deposition method (CVD method) such as a thermal CVD method or a plasma CVD method, a plating method such as electrolytic plating or electroless plating, or the like.

Among them, a thermal CVD method is preferred from the viewpoint of uniformity.

In the case of using the thermal CVD method to form the carbon film, the coverage of the carbon film and the thickness of the carbon film can be controlled by adjusting a temperature, a gas flow rate, and a treatment time.

The treatment temperature in the thermal CVD method is preferably, for example, 300°C to 1200°C. Here, the treatment temperature is preferably 300°C or higher, more preferably 500°C or higher, still more preferably 550°C or higher, and even more preferably 600°C or higher, from the viewpoint of efficiently forming the carbon film. In addition, the treatment temperature is preferably 1200°C or lower, more preferably 1150°C or lower, still more preferably 1100°C or lower, and even more preferably 1050°C or lower, from the viewpoint of preventing a reaction between Si and C.

The treatment time in the thermal CVD method is preferably, for example, 0.1 hours to 10 hours. Here, the treatment time is preferably 0.1 hours or longer, more preferably 0.12 hours or longer, still more preferably 0.2 hours or longer, and even more preferably 0.5 hours or longer, from the viewpoint of suitably covering the surface of the Si-based granulated body with the carbon film. In addition, the treatment time is preferably 10 hours or shorter, more preferably 8 hours or shorter, still more preferably 5 hours or shorter, and even more preferably 3 hours or shorter, from the viewpoint of a treatment cost.

In addition, it is more preferable that the treatment temperature is 500°C to 1100°C and the treatment time is 0.5 hours to 3 hours in the thermal CVD method.

### <<Lithium-Ion Battery>>

In a lithium-ion battery, a negative electrode using the lithium-ion battery negative electrode active material according to the present embodiment is preferably used.

The negative electrode in the present embodiment includes a conductive substrate and a conductive film laminated on a surface of the conductive substrate. The conductive film includes at least the lithium-ion battery negative electrode active material according to the present embodiment and a binder.

The conductive substrate functions as a current collector. Examples of a material thereof include Cu, a Cu alloy, Ni, a Ni alloy, Fe, and a Fe-based alloy, and among them, Cu and a Cu alloy are preferred.

Specific examples of a form of the conductive substrate include a foil form and a plate form. Among them, a foil form is preferred from the viewpoint of reducing a volume of the battery and improving a degree of freedom in form.

Examples of a material of the binder for forming the conductive film include a polyvinylidene fluoride (PVdF) resin, a fluorine resin such as polytetrafluoroethylene, a polyvinyl alcohol resin, a polyimide resin, a polyamide resin, a polyamideimide resin, a styrene-butadiene rubber (SBR), or polyacrylic acid. These may be used alone or in combination of two or more kinds thereof. Among them, a polyimide resin is particularly preferred from the viewpoint of mechanical strength, resistance to volume expansion of the negative electrode active material, prevention of peeling off from the conductive substrate, and the like.

The conductive film may include a conductive aid, if necessary, in addition to the negative electrode active material and the binder. In the case where a conductive aid is included, it is easier to ensure a conductive path for electrons.

In addition, the conductive film may include an aggregate, if necessary. In the case where an aggregate is included, expansion and contraction of the negative electrode during charging and discharging can be easily prevented, and collapse of the negative electrode can be prevented, so that the cycle characteristics can be further improved.

The negative electrode in the present embodiment can be produced by, for example, adding necessary amounts of the negative electrode active material, and, if necessary, a conductive aid and an aggregate to a binder dissolved in an appropriate solvent to form a paste, applying the paste to the surface of the conductive substrate, drying it, and optionally subjecting it to compaction, a heat treatment, or the like.

In the case of forming a lithium-ion battery using the negative electrode in the present embodiment, there are no particular limitations on a positive electrode, an electrolyte, a separator, and the like, which are basic components of the battery other than the negative electrode, and any known material can be used.

Examples of the positive electrode include those in which a layer including a positive electrode active material such as LiCoO₂, LiNiO₂, LiFePO₄, and LiMnO₂ is formed on a surface of a current collector such as an aluminum foil.

Examples of the electrolyte include an electrolytic solution in which a lithium salt is dissolved in a non-aqueous solvent. In addition, it is also possible to use a polymer in which a lithium salt is dissolved, a polymer solid electrolyte in which a polymer is impregnated with the above electrolytic solution, and the like.

Specific examples of the non-aqueous solvent include ethylene carbonate, propylene carbonate, butylene carbonate, dimethyl carbonate, diethyl carbonate, and methyl ethyl carbonate. These may be used alone or in combination of two or more kinds thereof.

Specific examples of the lithium salt include LiPF₆, LiBF₄, LiClO₄, LiCF₃SO₃, and LiAsF₆. These may be used alone or in combination of two or more kinds thereof.

Other battery components include a separator, a can (battery case), and a gasket. As for these, as long as they are commonly used in a lithium-ion battery, any of them can be appropriately combined to form a battery.

Note that, the shape of the battery is not particularly limited, and may be any shape such as a cylindrical shape, a rectangular shape, or a coin shape, and can be appropriately selected according to a specific application.

### EXAMPLES

Hereinafter, the present invention is described more specifically using Examples. Note that, "%" in the alloy composition is "mass%" unless otherwise specified.

### <<Examples 1 to 39 and Comparative Examples 1 to 4>>

### 1. Preparation of Si-based Powder

Respective raw materials were weighed out such that the Si phase included Si, the Sn-Cu compound phase included Si and Cu at 1:1, and the Si-X compound phase had the composition proportion shown in Tables 1 and 2, followed by heating and melting using a high frequency induction furnace to obtain a molten alloy. Alloy particles in which the Si-X compound phase, if desired, the Sn-Y compound phase and the Al-Y compound phase were dispersed in the Si phase were obtained from the molten alloy by a gas atomization method. The composition of the obtained alloy particles is as shown in Table 3. Note that, in Table 3, "-" means not included, and "Bal." means the balance.

An argon atmosphere was used as an atmosphere during the preparation of the molten alloys and the gas atomization. In addition, during the gas atomization, a high-pressure (4 MPa) argon gas was sprayed onto the molten alloy falling like a rod in the atomization chamber.

The obtained particles were mechanically finely pulverized using a wet bead mill to obtain a slurry of Si-based powder.

Note that, in Tables 1 and 2, "-" means not blended. In addition, the "average particle diameter (µm)" in the "Si-based powder" in Tables 1 and 2 is the average particle diameter (primary particle diameter) of the Si-based powder, and the average particle diameter of each particle such as the Si particles constituting the Si-based particles may be regarded as the same degree.

### 2. Preparation of Si-based Granulated Body

The conductive material and the binder shown in Tables 1 and 2 were added to the slurry of the Si-based powder obtained above so as to have the content proportions shown in Tables 1 and 2. Then, the Si-based granulated body was formed by a spray drying method adopting a rotary disk method.

In Tables 1 and 2, the conductive material "AB" means acetylene black, "CNT" means a carbon nanotube, and "CNF" means a carbon nanofiber. In Tables 1 and 2, the binder "PAANH₃" means ammonium polyacrylate, and "PVB" means a polyvinyl butyral resin.

### 3. Lithium-Ion Battery Negative Electrode Active Material

A carbon film was formed on the surface of the Si-based granulated body obtained above, by a thermal CVD method using a rotary kiln. The heat treatment temperature was 700°C for Examples 1 to 37, 500°C for Example 38, and 1100°C for Example 39, and an organic gas supplied into the furnace was an acetylene gas. In addition, Were obtained each lithium-ion battery negative electrode active material in which the thickness of the carbon film was adjusted by adjusting the gas flow rate and the heat treatment time. The heat treatment time was set to 1 hour for all of Examples 3, 38 and 39.

### <<Evaluation>>

### <Average Particle Diameter of Si-based Powder>

For the Si-based powder obtained in the above 1., the median diameter (D50) was determined based on the volume-based particle size distribution obtained using a laser diffraction/scattering particle size distribution analyzer (MT-3300, manufactured by MicrotracBEL Corp.), and was taken as the average particle diameter. The results are shown in Tables 1 and 2, and in the case where the Si-based powder includes only Si particles, the average particle diameter of the Si particles is shown. In addition, in the case where the Si-based powder includes Si particles, Si-X compound particles, and Sn-Cu compound particles, the average particle diameter of the particles as a whole is shown, and the average particle diameters of respective particles can be regarded as the same size.

### <Average Particle Diameter of Lithium-Ion Battery Negative Electrode Active Material>

A particle shape distribution measurement was performed on the lithium-ion battery negative electrode active material obtained in the above 3. using an image type particle size distribution measuring device (Morphologi manufactured by Malvern Panalytical), and the average particle diameter of the lithium-ion battery negative electrode active material was determined based on the result. The results are shown in Tables 1 and 2.

### <Strength of Si-based Granulated Body>

With respect to the Si-based granulated body obtained in the above 2., the compressive strength of five granulated bodies was measured using a particle compressive strength evaluation device (MCT series manufactured by Shimadzu Corporation), and the average value thereof was determined as the strength of the Si-based granulated body. The results are shown in Tables 1 and 2.

Note that, although the strength may change before and after the formation of the carbon film on the surface of the Si-based granulated body obtained in the above 3., the strength of the Si-based granulated body and the strength of the lithium-ion battery negative electrode active material including the carbon film may be regarded as the same since the strength of the Si-based granulated body is mainly determined by the binder that binds the Si-based powder and the conductive material.

### <Coverage on Surface of Carbon Film in Si-based Granulated Body>

The Si-based granulated body obtained in the above 2. was subjected to surface analysis using X-ray photoelectron spectroscopy (WuanteraSXM manufactured by PHI). Note that, monochromatic Al (1486.6 eV) was used as an X-ray source. In the obtained spectrum, a peak observed at 284.1 eV to 285.1 eV was defined as a peak of carbon atoms, and a surface intensity was calculated based on a intensity of the peak, thereby determining the coverage of the carbon film on the surface of the Si-based granulated body. The results are shown in Tables 1 and 2.

### <Content Proportion of SiC in Si-based Granulated Body>

The Si-based granulated body obtained in the above 2. was subjected to powder X-ray diffraction (XRD) measurement (Smartlab manufactured by Rigaku Corporation), and the ratio of the area of the peak derived from SiC to the total peak area in the obtained XRD pattern was defined as the content proportion (mass%) of SiC. The XRD measurement was performed under the conditions of tube: Co, tube voltage: 40 kV, tube current: 135 mA, scanning range: 20 = 20° to 120°, and X-ray wavelength: CoKα1. The results are shown in Tables 1 and 2.

### <Average Thickness of Carbon Film>

The surface of the lithium-ion battery negative electrode active material obtained in the above 3. was observed at a magnification of 200,000 times using a transmission electron microscope (TEM). Then, the average value of the thicknesses of five carbon films was determined as the average thickness of the carbon film. The results are shown in Tables 1 and 2.

### <Content Proportion of Carbon Film>

For the lithium-ion battery negative electrode active material obtained in the above 3., the content proportion of the carbon film was determined using a combustion-infrared absorption device. The results are shown in Tables 1 and 2.

### <Electrode Characteristics>

A lithium-ion battery was prepared using the lithium-ion battery negative electrode active material obtained in the above 3., and electrode characteristics of a negative electrode were evaluated.

### · Preparation of Coin-type Battery for Charging and Discharging Test

First, 100 parts by mass of the prepared lithium-ion battery negative electrode active material, 6 parts by mass of Ketjen black (manufactured by Lion Corporation) as a conductive aid, and 19 parts by mass of a polyimide (thermoplastic resin) as a binder were blended and mixed with N-methyl-2-pyrrolidone (NMP) as a solvent to thereby prepare a paste containing negative electrode material.

The paste was applied to a surface of a stainless steel (SUS) 316L foil (thickness: 20 µm) serving as a current collector by a doctor blade method, followed by drying, compaction by roll pressing, and punching on a disk having a diameter of 11 mm, to prepare a test electrode.

Next, a Li foil (thickness: 500 µm) was punched into substantially the same shape as the test electrode to form a counter electrode.

The test electrode was housed in a positive electrode can, the counter electrode was housed in a negative electrode can, and a separator made of a polyolefin-based microporous film was disposed between the test electrode and the counter electrode. Note that, the test electrode should be a negative electrode in a lithium-ion battery, but when a Li foil is used as the counter electrode, the Li foil is the negative electrode and the test electrode is the positive electrode.

Into the positive electrode can and the negative electrode can, a non-aqueous electrolytic solution prepared by dissolving LiPF₆ at a concentration of 1 mol/L in a mixed solvent of ethylene carbonate (EC):diethyl carbonate (DEC) = 1:1 (volume ratio) was injected, and the positive electrode can and the negative electrode can were fixed by fastening to prepare a coin-type battery for a charging and discharging test.

### · Charging and Discharging Test

The prepared coin-type battery for a charging and discharging test was subjected to one cycle including constant-current charging and discharging at a current value of 0.2 mA. A value obtained by dividing the capacity (mAh) used for occluding or releasing Li by an amount (g) of the active material is an initial charge capacity or an initial discharge capacity. A ratio of the initial discharge capacity to the initial charge capacity was determined as the initial Coulombic efficiency. The results are shown in Tables 1 and 2.

In the second and subsequent cycles, the charging and discharging test was performed at a rate of 1/5 C and up to 50 cycles was performed. Here, regarding the C rate, a current value for (charging and) discharging and amount of electricity required to (charge and) discharge the electrode in one hour is defined as 1C, and thus the 1/5C rate means charging or discharging in 5 hours. A ratio of the discharge capacity at the 50th cycle to the initial discharge capacity at the first cycle, that is, a discharge capacity retention rate was evaluated as the cycle characteristics. The results are shown in Tables 1 and 2.

Evaluation criteria for the initial discharge capacity are as follows.
A: the initial discharge capacity is 800 mAh/g or more.
B: the initial discharge capacity is 400 mAh/g or more and less than 800 mAh/g.
C: the initial discharge capacity is 350 mAh/g or more and less than 400 mAh/g.
D: the initial discharge capacity is less than 350 mAh/g.

Evaluation criteria for the initial Coulombic efficiency are as follows.
A: the initial Coulombic efficiency is 75% or more.
B: the initial Coulombic efficiency is 70% or more and less than 75%.
C: the initial Coulombic efficiency is 60% or more and less than 70%.
D: the initial Coulombic efficiency is less than 60%.

Evaluation criteria for the cycle characteristics are as follows.
A+: the discharge capacity retention rate after 50 cycles is 95% or more.
A: the discharge capacity retention rate after 50 cycles is 80% or more and less than 95%.
B: the discharge capacity retention rate after 50 cycles is 70% or more and less than 80%.
C: the discharge capacity retention rate after 50 cycles is 60% or more and less than 70%.
D: the discharge capacity retention rate after 50 cycles is less than 60%.

Based on the evaluation results for the initial discharge capacity, the initial Coulombic efficiency, and the cycle characteristics, comprehensive evaluation was performed on the basis of the score obtained by integrating 3 points for A+, 2 points for A, 1 point for B, 0 points for C, and -1 points for D. A score of 4 or more is considered good and passed, and a higher score is more preferred. On the other hand, 3 points or less is considered poor and failed. The results are shown in Tables 1 and 2.

**[Table 1]**

| | Si-based granulated body | | | | | |
|---|---|---|---|---|---|---|
| | Si-based powder | | | | | |
| | Proportion (wt%) | | | Kind | | Average particle diameter (µm) |
| | Si phase | Si-X compound phase | Sn-Y compound phase | Si-X compound phase | Sn-Y compound phase | |
| Example 1 | 60 | 35 | 5 | Si₂Fe | SnCu | 0.7 |
| Example 2 | 60 | 35 | 5 | Si₂Fe | SnCu | 0.7 |
| Example 3 | 60 | 35 | 5 | Si₂Fe | SnCu | 0.7 |
| Example 4 | 60 | 35 | 5 | Si₂Fe | SnCu | 0.7 |
| Example 5 | 60 | 35 | 5 | Si₂Fe | SnCu | 0.7 |
| Example 6 | 70 | 25 | 5 | Si₂Fe | SnCu | 0.8 |
| Example 7 | 75 | 20 | 5 | Si₂Fe | SnCu | 0.6 |
| Example 8 | 60 | 35 | 5 | Si₂Fe | SnCu | 0.7 |
| Example 9 | 20 | 75 | 5 | Si₂Fe | SnCu | 0.7 |
| Example 10 | 30 | 65 | 5 | Si₂Fe | SnCu | 0.7 |
| Example 11 | 50 | 45 | 5 | Si₂Fe | SnCu | 0.6 |
| Example 12 | 90 | 5 | 5 | Si₂Fe | SnCu | 0.6 |
| Example 13 | 100 | - | - | - | - | 0.7 |
| Example 14 | 60 | 35 | 5 | Si₂Fe | SnCu | 0.7 |
| Example 15 | 60 | 35 | 5 | Si₂Fe | SnCu | 0.7 |
| Example 16 | 60 | 35 | 5 | Si₂Fe | SnCu | 0.7 |
| Example 17 | 60 | 35 | 5 | Si₂Fe | SnCu | 0.7 |
| Example 18 | 60 | 35 | 5 | Si₂Fe | SnCu | 0.7 |
| Example 19 | 60 | 35 | 5 | Si₂Fe | SnCu | 0.7 |
| Example 20 | 60 | 35 | 5 | Si₂Fe | SnCu | 0.3 |

**[Table 1] (continued)**

| | Si-based granulated body | | | | | | | |
|---|---|---|---|---|---|---|---|---|
| | Conductive material | | | | Binder | | Strength (MPa) | SiC |
| | Particulate carbon | | Fibrous carbon | | | | | |
| | Kind | Content proportion (wt%) | Kind | Content proportion (wt%) | Kind | Content proportion (wt%) | | Content proportion (wt%) |
| Example 1 | AB | 5 | - | - | PAANH₃ | 3 | 2.5 | 0.6 |
| Example 2 | AB | 5 | - | - | PAANH₃ | 10 | 4.5 | 0.5 |
| Example 3 | AB | 4.5 | CNT | 0.5 | PAANH₃ | 10 | 4.3 | 0.7 |
| Example 4 | AB | 4.5 | CNT | 0.1 | PAANH₃ | 10 | 4.6 | 0.5 |
| Example 5 | AB | 4.5 | CNT | 0.05 | PAANH₃ | 10 | 4.2 | 0.4 |
| Example 6 | AB | 4.5 | CNT | 0.5 | PAANH₃ | 10 | 3.9 | 0.6 |
| Example 7 | AB | 4.5 | CNT | 0.5 | PAANH₃ | 10 | 4.2 | 0.7 |
| Example 8 | AB | 4.5 | CNF | 0.5 | PAANH₃ | 10 | 4.7 | 0.5 |
| Example 9 | AB | 5 | - | - | PAANH₃ | 10 | 4.4 | 0.6 |
| Example 10 | AB | 5 | - | - | PAANH₃ | 10 | 4.2 | 0.1 |
| Example 11 | AB | 5 | - | - | PAANH₃ | 10 | 3.8 | 0.5 |
| Example 12 | AB | 5 | - | - | PAANH₃ | 10 | 3.1 | 0.2 |
| Example 13 | AB | 5 | - | - | PAANH₃ | 10 | 3.9 | 0.5 |
| Example 14 | AB | 5 | - | - | PVB | 3 | 1.3 | 0.5 |
| Example 15 | AB | 5 | - | - | PAANH₃ | 10 | 3.3 | 0.4 |
| Example 16 | AB | 5 | - | - | PAANH₃ | 10 | 3.7 | 0.5 |
| Example 17 | AB | 5 | - | - | PAANH₃ | 10 | 3.8 | 0.3 |
| Example 18 | AB | 5 | - | - | PAANH₃ | 10 | 3.7 | 0.5 |
| Example 19 | AB | 5 | - | - | PAANH₃ | 10 | 3.6 | 0.1 |
| Example 20 | AB | 5 | - | - | PAANH₃ | 10 | 3.9 | 0.4 |

**[Table 1] (continued)**

| | Carbon film | | | Negative electrode active material |
|---|---|---|---|---|
| | Content proportion (wt%) | Average thickness (nm) | Coverage (wt%) in Si-based granulated body | Average particle diameter (µm) |
| Example 1 | 5 | 19 | 74.3 | 9.8 |
| Example 2 | 5 | 17 | 94.3 | 8.9 |
| Example 3 | 5 | 21 | 90.1 | 9.2 |
| Example 4 | 5 | 20 | 97.6 | 9.2 |
| Example 5 | 5 | 17 | 88.7 | 9.2 |
| Example 6 | 5 | 14 | 86.9 | 9.5 |
| Example 7 | 5 | 16 | 91.4 | 10.1 |
| Example 8 | 5 | 13 | 93.3 | 9.2 |
| Example 9 | 5 | 19 | 90.9 | 10.4 |
| Example 10 | 5 | 24 | 85.8 | 10.4 |
| Example 11 | 5 | 18 | 88.8 | 11.2 |
| Example 12 | 5 | 23 | 87.5 | 8.6 |
| Example 13 | 5 | 20 | 94.6 | 9.3 |
| Example 14 | 5 | 20 | 72.5 | 9.8 |
| Example 15 | 5 | 18 | 89.0 | 2.5 |
| Example 16 | 20 | 20 | 87.1 | 4.1 |
| Example 17 | 19 | 19 | 88.0 | 5.9 |
| Example 18 | 18 | 18 | 96.1 | 15.3 |
| Example 19 | 5 | 19 | 93.3 | 25.6 |
| Example 20 | 5 | 17 | 91.4 | 8.6 |

**[Table 1] (continued)**

| | Evaluation | | | | | | |
|---|---|---|---|---|---|---|---|
| | Electrode characteristics | | | | | | Comprehensive evaluation |
| | Initial discharge capacity | | Initial Coulombic efficiency | | Cycle characteristics | | |
| | Capacity (mAh/g) | Evaluation | Efficiency (%) | Evaluation | Characteristics (%) | Evaluation | |
| Example 1 | 1851 | A | 78 | A | 72 | B | 5 |
| Example 2 | 1721 | A | 77 | A | 78 | B | 5 |
| Example 3 | 1717 | A | 78 | A | 98 | A+ | 7 |
| Example 4 | 1706 | A | 78 | A | 95 | A+ | 7 |
| Example 5 | 1700 | A | 78 | A | 92 | A | 6 |
| Example 6 | 2036 | A | 79 | A | 96 | A+ | 7 |
| Example 7 | 2239 | A | 80 | A | 95 | A+ | 7 |
| Example 8 | 1722 | A | 76 | A | 96 | A+ | 7 |
| Example 9 | 615 | B | 71 | B | 92 | A | 4 |
| Example 10 | 783 | B | 73 | B | 90 | A | 4 |
| Example 11 | 1461 | A | 74 | B | 77 | B | 4 |
| Example 12 | 1919 | A | 83 | A | 64 | C | 4 |
| Example 13 | 1989 | A | 84 | A | 61 | C | 4 |
| Example 14 | 1866 | A | 78 | A | 70 | B | 5 |
| Example 15 | 1711 | A | 75 | A | 75 | B | 5 |
| Example 16 | 1720 | A | 75 | A | 76 | B | 5 |
| Example 17 | 1722 | A | 75 | A | 75 | B | 5 |
| Example 18 | 1729 | A | 78 | A | 73 | B | 5 |
| Example 19 | 1735 | A | 78 | A | 71 | B | 5 |
| Example 20 | 1707 | A | 71 | B | 72 | B | 4 |

[

**[Table 2]**

| | Si-based granulated body | | | | | |
|---|---|---|---|---|---|---|
| | Si-based powder | | | | | |
| | Proportion (wt%) | | | Kind | | Average particle diameter (µm) |
| | Si phase | Si-X compound phase | Sn-Y compound phase | Si-X compound phase | Sn-Y compound phase | |
| Example 21 | 60 | 35 | 5 | Si₂Fe | SnCu | 1.5 |
| Example 22 | 60 | 39.5 | 0.5 | Si₂Fe | SnCu | 0.7 |
| Example 23 | 60 | 35 | 5 | Si₂Fe | SnCu | 0.7 |
| Example 24 | 60 | 35 | 5 | Si₂Fe | SnCu | 0.7 |
| Example 25 | 60 | 35 | 5 | Si₂Fe | SnCu | 0.7 |
| Example 26 | 60 | 35 | 5 | Si₂Fe | SnCu | 0.7 |
| Example 27 | 60 | 35 | 5 | Si₂Fe | SnCu | 0.7 |
| Example 28 | 60 | 35 | 5 | Si₂Fe | SnCu | 0.7 |
| Example 29 | 60 | 35 | 5 | Si₂Fe | SnCu | 0.7 |
| Example 30 | 60 | 35 | 5 | Si₂Fe | SnCu | 0.7 |
| Example 31 | 60 | 35 | 5 | Si₂Fe | SnCu | 0.7 |
| Example 32 | 60 | 35 | 5 | Si₂Fe | SnCu | 0.7 |
| Example 33 | 60 | 35 | 5 | Si₂Ni | SnCu | 0.7 |
| Example 34 | 60 | 35 | 5 | Si₂Cr | SnCu | 0.7 |
| Example 35 | 60 | 35 | 5 | Si₂Zr | SnCu | 0.7 |
| Example 36 | 60 | 35 | 5 | Si₂Ti | SnCu | 0.7 |
| Example 37 | 60 | 40 | 0 | Si₂Fe | - | 0.7 |
| Example 38 | 60 | 35 | 5 | Si₂Fe | SnCu | 0.7 |
| Example 39 | 60 | 35 | 5 | Si₂Fe | SnCu | 0.7 |
| Comparative Example 1 | 60 | 35 | 5 | Si₂Fe | SnCu | 0.7 |
| Comparative Example 2 | 60 | 35 | 5 | Si₂Fe | SnCu | 0.7 |
| Comparative Example 3 | 60 | 35 | 5 | Si₂Fe | SnCu | 0.7 |
| Comparative Example 4 | 60 | 35 | 5 | Si₂Fe | SnCu | 0.7 |

**[Table 2] (continued)**

| | Si-based granulated body | | | | | | | |
|---|---|---|---|---|---|---|---|---|
| | Conductive material | | | | Binder | | Strength (MPa) | SiC |
| | Particulate carbon | | Fibrous carbon | | | | | |
| | Kind | Content proportion (wt%) | Kind | Content proportion (wt%) | Kind | Content proportion (wt%) | | Content proportion (wt%) |
| Example 21 | AB | 5 | - | - | PAANH₃ | 10 | 4.1 | 0.5 |
| Example 22 | AB | 5 | - | - | PAANH₃ | 10 | 3.5 | 0.3 |
| Example 23 | AB | 10 | - | - | PAANH₃ | 10 | 3,3 | 0.3 |
| Example 24 | AB | 4 | - | - | PAANH₃ | 10 | 3.4 | 0.4 |
| Example 25 | AB | 3 | - | - | PAANH₃ | 10 | 3.4 | 0.5 |
| Example 26 | AB | 2 | - | - | PAANH₃ | 10 | 3.3 | 0.3 |
| Example 27 | AB | 1 | - | - | PAANH₃ | 10 | 3.6 | 0.4 |
| Example 28 | AB | 0.5 | - | - | PAANH₃ | 10 | 3.7 | 0.4 |
| Example 29 | AB | 5 | - | - | PAANH₃ | 10 | 5.6 | 0.6 |
| Example 30 | AB | 5 | - | - | PAANH₃ | 10 | 2.4 | 0.4 |
| Example 31 | AB | 5 | - | - | PAANH₃ | 10 | 2.9 | 0.5 |
| Example 32 | AB | 5 | - | - | PAANH₃ | 10 | 3.0 | 0.2 |
| Example 33 | AB | 5 | - | - | PAANH₃ | 10 | 3.3 | 0.2 |
| Example 34 | AB | 5 | - | - | PAANH₃ | 10 | 3.7 | 0.5 |
| Example 35 | AB | 5 | - | - | PAANH₃ | 10 | 4.1 | 0.4 |
| Example 36 | AB | 5 | - | - | PAANH₃ | 10 | 3.9 | 0.4 |
| Example 37 | AB | 5 | - | - | PAANH₃ | 10 | 3.6 | 0.4 |
| Example 38 | AB | 4.5 | CNT | 0.5 | PAANH₃ | 10 | 4.3 | 0.7 |
| Example 39 | AB | 4.5 | CNT | 0.5 | PAANH₃ | 10 | 4.3 | 18 |
| Comparative Example 1 | AB | 5 | - | - | PAANH₃ | 10 | 3.3 | 0.3 |
| Comparative Example 2 | - | - | - | - | PAANH₃ | 10 | 3.6 | 0.4 |
| Comparative Example 3 | - | - | - | - | PAANH₃ | 10 | 3.2 | 0.5 |
| Comparative Example 4 | - | | - | - | - | - | 0 | 0.4 |

**[Table 2] (continued)**

| | Carbon film | | | Negative electrode active material |
|---|---|---|---|---|
| | Content proportion (wt%) | Average thickness (nm) | Coverage (wt%) in Si-based granulated body | Average particle diameter (µm) |
| Example 21 | 5 | 18 | 90.5 | 9.7 |
| Example 22 | 5 | 17 | 86.9 | 9.8 |
| Example 23 | 5 | 16 | 88.2 | 9.6 |
| Example 24 | 19 | 19 | 86.8 | 9.9 |
| Example 25 | 20 | 20 | 89.4 | 9.4 |
| Example 26 | 22 | 22 | 90.2 | 9.5 |
| Example 27 | 17 | 17 | 92.5 | 9.8 |
| Example 28 | 5 | 19 | 91.2 | 9.8 |
| Example 29 | 20 | 997 | 86.9 | 10.2 |
| Example 30 | 1 | 2 | 88.1 | 9.8 |
| Example 31 | 4 | 4 | 92.4 | 9.9 |
| Example 32 | 9 | 9 | 89.5 | 9.7 |
| Example 33 | 5 | 18 | 90.1 | 9.1 |
| Example 34 | 5 | 24 | 95.1 | 9.0 |
| Example 35 | 5 | 21 | 89.2 | 8.5 |
| Example 36 | 5 | 20 | 85.7 | 8.8 |
| Example 37 | 5 | 19 | 90.4 | 8.9 |
| Example 38 | 5 | 21 | 25.3 | 9.2 |
| Example 39 | 5 | 21 | 90.1 | 9.2 |
| Comparative Example 1 | - | - | 86.3 | 9.2 |
| Comparative Example 2 | 5 | 17 | 89.2 | 9.1 |
| Comparative Example 3 | - | - | 90.1 | 9.5 |
| Comparative Example 4 | - | - | 0 | 0.8 |

**[Table 2] (continued)**

| | Evaluation | | | | | | |
|---|---|---|---|---|---|---|---|
| | Electrode characteristics | | | | | | Comprehensive evaluation |
| | Initial discharge capacity | | Initial Coulombic efficiency | | Cycle characteristics | | |
| | Capacity (mAh/g) | Evaluation | Efficiency (%) | Evaluation | Characteristics (%) | Evaluation | |
| Example 21 | 1739 | A | 78 | A | 70 | B | 5 |
| Example 22 | 1705 | A | 76 | A | 76 | B | 5 |
| Example 23 | 1694 | A | 73 | B | 79 | B | 4 |
| Example 24 | 1721 | A | 78 | A | 76 | B | 5 |
| Example 25 | 1733 | A | 78 | A | 76 | B | 5 |
| Example 26 | 1740 | A | 78 | A | 75 | B | 5 |
| Example 27 | 1748 | A | 79 | A | 73 | B | 5 |
| Example 28 | 1751 | A | 79 | A | 72 | B | 5 |
| Example 29 | 1598 | A | 74 | B | 78 | B | 4 |
| Example 30 | 1749 | A | 78 | A | 73 | B | 5 |
| Example 31 | 1728 | A | 78 | A | 74 | B | 5 |
| Example 32 | 1711 | A | 78 | A | 73 | B | 5 |
| Example 33 | 1733 | A | 78 | A | 75 | B | 5 |
| Example 34 | 1707 | A | 76 | A | 76 | B | 5 |
| Example 35 | 1725 | A | 78 | A | 79 | B | 5 |
| Example 36 | 1720 | A | 78 | A | 78 | B | 5 |
| Example 37 | 1710 | A | 75 | A | 74 | B | 5 |
| Example 38 | 1775 | A | 73 | B | 88 | A | 5 |
| Example 39 | 788 | B | 74 | B | 96 | A+ | 5 |
| Comparative Example 1 | 1761 | A | 78 | A | 58 | D | 3 |
| Comparative Example 2 | 1762 | A | 77 | A | 57 | D | 3 |
| Comparative Example 3 | 1773 | A | 77 | A | 51 | D | 3 |
| Comparative Example 4 | 1785 | A | 73 | B | 43 | D | 2 |

**[Table 3]**

| | Proportion (wt%) | | | Kind | |
|---|---|---|---|---|---|
| | Si phase | Si-X compound phase | Sn-Y compound phase | Si-X compound phase | Sn-Y compound phase |
| Example 1 | 60 | 35 | 5 | Si₂Fe | SnCu |
| Example 2 | 60 | 35 | 5 | Si₂Fe | SnCu |
| Example 3 | 60 | 35 | 5 | Si₂Fe | SnCu |
| Example 4 | 60 | 35 | 5 | Si₂Fe | SnCu |
| Example 5 | 60 | 35 | 5 | Si₂Fe | SnCu |
| Example 6 | 70 | 25 | 5 | Si₂Fe | SnCu |
| Example 7 | 75 | 20 | 5 | Si₂Fe | SnCu |
| Example 8 | 60 | 35 | 5 | Si₂Fe | SnCu |
| Example 9 | 20 | 75 | 5 | Si₂Fe | SnCu |
| Example 10 | 30 | 65 | 5 | Si₂Fe | SnCu |
| Example 11 | 50 | 45 | 5 | Si₂Fe | SnCu |
| Example 12 | 90 | 5 | 5 | Si₂Fe | SnCu |
| Example 13 | 100 | - | - | - | - |
| Example 14 | 60 | 35 | 5 | Si₂Fe | SnCu |
| Example 15 | 60 | 35 | 5 | Si₂Fe | SnCu |
| Example 16 | 60 | 35 | 5 | Si₂Fe | SnCu |
| Example 17 | 60 | 35 | 5 | Si₂Fe | SnCu |
| Example 18 | 60 | 35 | 5 | Si₂Fe | SnCu |
| Example 19 | 60 | 35 | 5 | Si₂Fe | SnCu |
| Example 20 | 60 | 35 | 5 | Si₂Fe | SnCu |
| Example 21 | 60 | 35 | 5 | Si₂Fe | SnCu |
| Example 22 | 60 | 39.5 | 0.5 | Si₂Fe | SnCu |
| Example 23 | 60 | 35 | 5 | Si₂Fe | SnCu |
| Example 24 | 60 | 35 | 5 | Si₂Fe | SnCu |
| Example 25 | 60 | 35 | 5 | Si₂Fe | SnCu |
| Example 26 | 60 | 35 | 5 | Si₂Fe | SnCu |
| Example 27 | 60 | 35 | 5 | Si₂Fe | SnCu |
| Example 28 | 60 | 35 | 5 | Si₂Fe | SnCu |
| Example 29 | 60 | 35 | 5 | Si₂Fe | SnCu |
| Example 30 | 60 | 35 | 5 | Si₂Fe | SnCu |
| Example 31 | 60 | 35 | 5 | Si₂Fe | SnCu |
| Example 32 | 60 | 35 | 5 | Si₂Fe | SnCu |
| Example 33 | 60 | 35 | 5 | Si₂Ni | SnCu |
| Example 34 | 60 | 35 | 5 | Si₂Cr | SnCu |
| Example 35 | 60 | 35 | 5 | Si₂Zr | SnCu |
| Example 36 | 60 | 35 | 5 | Si₂Ti | SnCu |
| Example 37 | 60 | 40 | - | Si₂Fe | - |
| Example 38 | 60 | 35 | 5 | Si₂Fe | SnCu |
| Example 39 | 60 | 35 | 5 | Si₂Fe | SnCu |
| Comparative Example 1 | 60 | 35 | 5 | Si₂Fe | SnCu |
| Comparative Example 2 | 60 | 35 | 5 | Si₂Fe | SnCu |
| Comparative Example 3 | 60 | 35 | 5 | Si₂Fe | SnCu |
| Comparative Example 4 | 60 | 35 | 5 | Si₂Fe | SnCu |

**[Table 3] (continued)**

| | Composition (wt%) | | | | | | | |
|---|---|---|---|---|---|---|---|---|
| | Si | Fe | Sn | Cu | Ni | Cr | Zr | Ti |
| Example 1 | Bal. | 17.4 | 3.0 | 2.0 | - | - | - | - |
| Example 2 | Bal. | 17.4 | 3.0 | 2.0 | - | - | - | - |
| Example 3 | Bal. | 17.4 | 3.0 | 2.0 | - | - | - | - |
| Example 4 | Bal. | 17.4 | 3.0 | 2.0 | - | - | - | - |
| Example 5 | Bal. | 17.4 | 3.0 | 2.0 | - | - | - | - |
| Example 6 | Bal. | 12.5 | 3.0 | 2.0 | - | - | - | - |
| Example 7 | Bal. | 10.0 | 3.0 | 2.0 | - | - | - | - |
| Example 8 | Bal. | 17.4 | 3.0 | 2.0 | - | - | - | - |
| Example 9 | Bal. | 37.3 | 3.0 | 2.0 | - | - | - | - |
| Example 10 | Bal. | 32.4 | 3.0 | 2.0 | - | - | - | - |
| Example 11 | Bal. | 22.4 | 3.0 | 2.0 | - | - | - | - |
| Example 12 | Bal. | 2.5 | 3.0 | 2.0 | - | - | - | - |
| Example 13 | 100 | - | - | - | - | - | - | - |
| Example 14 | Bal. | 17.4 | 3.0 | 2.0 | - | - | - | - |
| Example 15 | Bal. | 17.4 | 3.0 | 2.0 | - | - | - | - |
| Example 16 | Bal. | 17.4 | 3.0 | 2.0 | - | - | - | - |
| Example 17 | Bal. | 17.4 | 3.0 | 2.0 | - | - | - | - |
| Example 18 | Bal. | 17.4 | 3.0 | 2.0 | - | - | - | - |
| Example 19 | Bal. | 17.4 | 3.0 | 2.0 | - | - | - | - |
| Example 20 | Bal. | 17.4 | 3.0 | 2.0 | - | - | - | - |
| Example 21 | Bal. | 17.4 | 3.0 | 2.0 | - | - | - | - |
| Example 22 | Bal. | 19.8 | 0.3 | 0.2 | - | - | - | - |
| Example 23 | Bal. | 17.4 | 3.0 | 2.0 | - | - | - | - |
| Example 24 | Bal. | 17.4 | 3.0 | 2.0 | - | - | - | - |
| Example 25 | Bal. | 17.4 | 3.0 | 2.0 | - | - | - | - |
| Example 26 | Bal. | 17.4 | 3.0 | 2.0 | - | - | - | - |
| Example 27 | Bal. | 17.4 | 3.0 | 2.0 | - | - | - | - |
| Example 28 | Bal. | 17.4 | 3.0 | 2.0 | - | - | - | - |
| Example 29 | Bal. | 17.4 | 3.0 | 2.0 | - | - | - | - |
| Example 30 | Bal. | 17.4 | 3.0 | 2.0 | - | - | - | - |
| Example 31 | Bal. | 17.4 | 3.0 | 2.0 | - | - | - | - |
| Example 32 | Bal. | 17.4 | 3.0 | 2.0 | - | - | - | - |
| Example 33 | Bal. | - | 3.0 | 2.0 | 17.9 | - | - | - |
| Example 34 | Bal. | - | 3.0 | 2.0 | - | 16.8 | - | - |
| Example 35 | Bal. | - | 3.0 | 2.0 | - | - | 21.6 | - |
| Example 36 | Bal. | - | 3.0 | 2.0 | - | - | - | 16.1 |
| Example 37 | Bal. | 20.0 | - | - | - | - | - | - |
| Example 38 | Bal. | 17.4 | 3.0 | 2.0 | - | - | - | - |
| Example 39 | Bal. | 17.4 | 3.0 | 2.0 | - | - | - | - |
| Comparative Example 1 | Bal. | 17.4 | 3.0 | 2.0 | - | - | - | - |
| Comparative Example 2 | Bal. | 17.4 | 3.0 | 2.0 | - | - | - | - |
| Comparative Example 3 | Bal. | 17.4 | 3.0 | 2.0 | - | - | - | - |
| Comparative Example 4 | Bal. | 17.4 | 3.0 | 2.0 | - | - | - | - |

As seen from the above results, the lithium-ion battery negative electrode active material according to the present embodiment has good cycle characteristics while maintaining a good initial discharge capacity and initial Coulombic efficiency. This is considered to be because the decomposition of the electrolytic solution is prevented by forming the Si-based powder into a Si-based granulated body and further forming a carbon film on the surface thereof.

On the other hand, Comparative Example 1, which is a Si-based granulated body including no carbon film, and Comparative Example 4, which is in the Si-based powder is an ungranulated state, have poor cycle characteristics, and have no effects of the present invention. In addition, in Comparative Examples 2 and 3 in which the conductive material is not included in the Si-based granulated body, since the conductive path of the Si-based granulated body cannot be formed, the cycle characteristics decrease, and the effects of the present invention cannot be obtained.

In Examples 1 to 37, since the Si-based powder is formed into a Si-based granulated body and a carbon film is further formed on the surface thereof, the effects of the present invention are widely obtained.

In Examples 3 to 8, since the particulate carbon and the fibrous carbon are used in combination as the conductive material, the conductive path can be maintained even after charging and discharging, and thus particularly excellent cycle characteristics can be obtained.

In Examples 9 and 10, since the proportion of the Si phase is small, although the result of the cycle characteristics is excellent, the initial discharge capacity is inferior to that in Example 2 in which the proportion of the Si phase is large.

In Examples 12 and 13, since the proportion of the Si phase is large, the results of the initial discharge capacity and the initial Coulombic efficiency are good, but the cycle characteristics are inferior to those in Example 2. This is considered to be because the expansion amount of the entire electrode is increased, and the effect of preventing the collapse of the electrode is lower than that in Example 2.

Example 14 is an example in which PVB is used as the binder of the Si-based granulated body. Since the strength of the Si-based granulated body is lower than that in Example 1 in which the same amount of PAANH₃ is used as the binder, it is preferable to select an appropriate content proportion according to the kind of the binder.

In Example 15, it is considered that the average particle diameter of the lithium-ion battery negative electrode active material is small, and the effect of preventing the decomposition reaction of the electrolytic solution on the surface is lower than that in other Examples. In Examples 16 and 17, although not as small as that in Example 15, the average particle diameter of the lithium-ion battery negative electrode active material is small, and the initial Coulombic efficiency and the cycle characteristics are lower than those in other Examples. On the other hand, in Examples 18 and 19, since the average particle diameter is large, the absolute amount of expansion of the Si-based granulated body accompanying charging and discharging is large, and the electrode is likely to collapse, and thus the cycle characteristics are lower than those in other Examples. As seen from these, in order to obtain better cycle characteristics, it is preferable to adopt a more suitable average particle diameter.

In Example 20, since the average particle diameter of the Si-based powder is small, the initial Coulombic efficiency is lower than that in other Examples. It is presumed that the decomposition reaction of the electrolytic solution is likely to occur on the surface of the Si particles in the Si-based granulated body. On the other hand, when the average particle diameter of the Si-based powder is large as in Example 21, the cycle characteristics are lower than those in other Examples. It is presumed that this is because the granulated body is likely to collapse due to a large absolute amount of volume expansion of the Si particles in the Si-based granulated body accompanying charging and discharging.

As seen from the results in Examples 23 to 28, the content proportion of the conductive material also has a suitable range, when the content proportion is small, the conductivity tends to decrease and the cycle characteristics tend to decrease, and when the content proportion is large, the initial Coulombic efficiency tends to decrease.

As seen from the results in Examples 29 to 32, the average thickness of the carbon film also has a suitable range, when the average thickness is too large, the initial Coulombic efficiency tends to decrease, and when the average thickness is too small, the cycle characteristics tend to decrease.

As seen from the results in Examples 3 and 38, when the coverage of the carbon film in the Si-based granulated body is increased, the decomposition reaction of the electrolytic solution during charging and discharging due to the carbon film is suitably prevented, and the electrode characteristics such as the initial Coulombic efficiency and the cycle characteristics tend to be improved. Note that, the coverage can be adjusted based on the treatment temperature and time for forming the carbon film.

As seen from the results in Example 3 and Example 39, since the proportion of Si contributing to the reaction during charging and discharging can be increased by reducing the content proportion of SiC in the Si-based granulated body, a high initial capacity is obtained. It is also found that a high initial Coulombic efficiency can be achieved. Note that, the content proportion of SiC can be adjusted based on the treatment temperature and time for forming the carbon film.

Although the lithium-ion battery negative electrode active material according to the present embodiment has been described in detail above, the present invention is not limited to the above embodiments and Examples, and various modifications can be made without departing from the scope thereof.

The present application is based on Japanese patent application No. 2023-041160 filed on March 15, 2023, and the contents thereof are incorporated herein as reference.

## Claims

1. A lithium-ion battery negative electrode active material, comprising a Si-based granulated body that is formed by binding a Si-based powder and a conductive material by a binder, wherein
the Si-based powder comprises a Si phase, and
the lithium-ion battery negative electrode active material comprises a carbon film on a surface of the Si-based granulated body.

2. The lithium-ion battery negative electrode active material according to claim 1, wherein the Si-based granulated body has a coverage of the carbon film of 30% or more.

3. The lithium-ion battery negative electrode active material according to claim 1 or 2, wherein the Si-based granulated body has a content proportion of SiC of less than 15 mass%.

4. The lithium-ion battery negative electrode active material according to claim 1 or 2, wherein the Si-based granulated body has a strength of 1.0 MPa or more.

5. The lithium-ion battery negative electrode active material according to claim 1 or 2, wherein
the Si-based powder further comprises a Si-X compound phase and at least one of a Sn-Y compound phase or an Al-Y compound phase,
X in the Si-X compound phase is at least one element selected from the group consisting of Fe, Ni, Co, Mn, Ti, V, Zr, and Cr,
Y in the Sn-Y compound phase and the Al-Y compound phase is at least one element selected from the group consisting of Cu, Fe, Ni, Cr, Co, Mn, Zr, and Ti, and
the Si-based powder has a content proportion of the Si phase of 10 mass% to 80 mass%, and a total content proportion of the Sn-Y compound phase and the Al-Y compound phase of 0.1 mass% to 18 mass%.

6. The lithium-ion battery negative electrode active material according to claim 1 or 2, wherein the conductive material comprises a particulate carbon and a fibrous carbon.

7. The lithium-ion battery negative electrode active material according to claim 5, wherein the Si-based powder comprises a Sn-Cu compound phase as the Sn-Y compound phase.
